# EUROPÄISCHE PATENTSCHRIFT

(11) **EP 3 234 423 B1**
(45) Veröffentlichungstag und Bekanntmachung des Hinweises auf die Patenterteilung: **14.03.2018**
(21) Anmeldenummer: 15794898.5
(22) Anmeldetag: 12.11.2015
(51) Int. Cl.: F16K 1/36, F16K 31/06

(54) **VENTIL ZUR STEUERUNG DER STRÖMUNG EINES FLUIDES**
VALVE FOR CONTROLLING THE FLOW OF A FLUID
SOUPAPE POUR COMMANDER L'ÉCOULEMENT D'UN FLUIDE

(43) Veröffentlichungstag der Anmeldung: 25.10.2017
(73) Patentinhaber: Festo AG & Co. KG, 73734 Esslingen (DE)
(72) Erfinder: MÜLLER, Sebastian, 70563 Stuttgart (DE); SZILI, Tamas, 73730 Esslingen (DE)
(74) Vertreter: Patentanwälte Magenbauer & Kollegen Partnerschaft mbB
(86) Internationale Anmeldenummer: PCT/EP2015/076441
(87) Internationale Veröffentlichungsnummer: WO 2017/080602

(56) Entgegenhaltungen:
- EP-A1- 2 450 601
- DE-A1- 10 258 859
- DE-A1-102013 011 759
- US-A- 2 689 581
- US-A- 2 754 841
- US-A- 3 605 793
- US-A- 3 610 276
- US-A- 5 044 604

## Beschreibung

Die Erfindung betrifft ein Ventil zur Steuerung der Strömung eines Fluides, mit einem Ventilgehäuse, das eine Ventilkammer definiert, in die mehrere Ventilkanäle einmünden, wobei die Kanalmündung eines ersten Ventilkanals dieser mehreren Ventilkanäle von einem der Ventilkammer zugewandten Ventilsitz umrahmt ist, dem in der Ventilkammer eine Verschlussfläche gegenüberliegt, die an einer axialen Vorderseite eines Ventilgliedes angeordnet ist, das im Rahmen einer in Achsrichtung einer Hauptachse orientierten Hubbewegung zwischen einer mit seiner Verschlussfläche an dem Ventilsitz anliegenden und dadurch den ersten Ventilkanal fluiddicht von der Ventilkammer abtrennenden Schließstellung und mindestens einer von dem Ventilsitz abgehobenen und dadurch eine Fluidverbindung zwischen dem ersten Ventilkanal und der Ventilkammer freigebenden Offenstellung axial bewegbar ist, wobei mindestens ein zweiter Ventilkanal der mehreren Ventilkanäle abseits des Ventilsitzes in ständiger Fluidverbindung mit der Ventilkammer steht und wobei das Ventilglied im Bereich seiner Vorderseite eine nach vorne ragende, zu der Hauptachse koaxiale, ringförmige Strömungsleitwand aufweist, die einen nach vorne hin offenen Strömungsleitraum umrahmt, wobei der erste Ventilkanal ein zur Fluideinspeisung dienender Einlasskanal und der mindestens einen zweite Ventilkanal ein der Fluidabfuhr dienender Auslasskanal ist, und wobei die Strömungsleitwand an mehreren entlang ihres Umfanges verteilten Stellen unter Bildung von Fluiddurchtrittsöffnungen radial unterbrochen ist, die jeweils eine offene Verbindung zwischen dem Strömungsleitraum und dem das Ventilglied umschließenden Außenbereich der Ventilkammer herstellen.

Bei einem aus der WO 2014/122209 A1 bekannten Ventil ist ein mit einem Ventilsitz ausgestatteter erster Ventilkanal von einem Auslasskanal gebildet, durch den hindurch in einer Offenstellung eines axial beweglichen Ventilgliedes ein Fluid austreten kann, das zuvor durch mehrere zweite Ventilkanäle hindurch in eine Ventilkammer eingespeist wurde. Um zu erreichen, dass unabhängig vom momentanen axialen Abstand zwischen dem Ventilsitz und einer Verschlussfläche des Ventilgliedes ein gleichgroßer maximaler Strömungsquerschnitt definiert ist, verfügt das Ventilglied an seiner Vorderseite über eine ringförmige Strömungsleitwand, die eine den Ventilsitz aufweisende Erhebung unabhängig von seiner Schaltstellung stets axial überlappt.

Aus der EP 2 450 601 A1 ist ein Ventil der eingangs genannten Art bekannt, das über einen Ventilteller verfügt, der an einer Vorderseite eine Verschlussfläche aufweist, mit der er in einer Schließstellung an einem Ventilsitz anliegt, der die Kanalmündung eines Ventilkanals umrahmt. Der Ventilteller hat eine nach vorne über die Verschlussfläche hinausragende Krempe, die die Verschlussfläche umrahmt und die mit mehreren Durchbrechungen versehen ist, durch die ein Medium hindurchströmen kann, wenn der Ventilteller eine von dem Ventilsitz abgehobene Offenstellung einnimmt.

Der Erfindung liegt die Aufgabe zugrunde, ein Ventil der eingangs genannten Art zu schaffen, um strömungsbedingte Einflüsse auf das Umschaltverhalten des Ventilgliedes zu minimieren.

Zur Lösung dieser Aufgabe ist in Verbindung mit den eingangs genannten Merkmalen vorgesehen, dass die Strömungsleitwand mit einer axial nach vorne weisenden Vorderkante endet, die bezüglich einer die Verschlussfläche enthaltenden und zu der Hauptachse rechtwinkeligen Bezugsebene axial zurückversetzt ist.

Bei diesem Ventil fungiert der dem Ventilsitz zugeordnete erste Ventilkanal als Einlasskanal, durch den hindurch das zu steuernde Fluid in das Ventil eingespeist wird. In der Schließstellung liegt das Ventilglied mit seiner Verschlussfläche auf dem Ventilsitz auf und verhindert einen Fluideintritt aus dem ersten Ventilkanal in die ständig mit mindestens einem Auslasskanal kommunizierende Ventilkammer. In der Offenstellung des Ventilgliedes streicht das in die Ventilkammer einströmende Fluid an der Vorderseite des Ventilgliedes vorbei, wobei es allerdings auch in den Strömungsleitraum eintritt und partiell durch die perforierte Strömungsleitwand aufgestaut wird. Die Folge ist eine Reduzierung der Strömungsgeschwindigkeit und damit verbunden ein Anstieg des statischen Druckes, sodass das Ventilglied staudruckunterstützt in der Offenstellung gehalten werden kann. Die für die Perforation der Strömungsleitwand verantwortlichen Fluiddurchtrittsöffnungen sorgen dafür, dass ein gewisser Anteil des Fluides mehr oder weniger ungehindert durch den Strömungsleitraum hindurchströmen kann, sodass der die Erhöhung des statischen Druckes bewirkende Rückstaueffekt begrenzt ist und sich das Ventilglied bei Bedarf mit relativ geringer Betätigungskraft in die Schließstellung zurückschalten lässt. Die partiell durchbrochene Formgebung der Strömungsleitwand bewirkt, dass entlang des Wandumfanges nur partiell ein Staudruck entsteht, was außer dem schon geschilderten Effekt auch zur Folge hat, dass die Empfindlichkeit gegenüber Fertigungstoleranzen relativ gering ist.

Als besonders vorteilhaft wird es in diesem Zusammenhang angesehen, dass die Strömungsleitwand bezüglich der erwähnten Bezugsebene axial zurückversetzt ist, das heißt in Achsrichtung der Hauptachse ein axialer Abstand zwischen der Verschlussfläche und der Vorderkante der Strömungsleitwand besteht. Auf diese Weise ist die gewünschte Stauwirkung gepaart mit der Möglichkeit eines ungehinderten radialen Abströmens des überwiegenden Fluidanteils bei geöffnetem Ventilglied. Der Einfluss der Strömungsleitwand auf den Durchsatz des Ventils ist damit besonders gering.

Vorteilhafte Weiterbildungen der Erfindungen gehen aus den Unteransprüchen hervor.

Eine, mehrere oder sämtliche Fluiddurchtrittsöffnungen können peripher geschlossen und nach Art von Durchgangslöchern ausgebildet sein. Vor allem in Bezug auf niedrige Herstellungskosten ist es jedoch von Vorteil, wenn die Fluiddurchtrittsöffnungen zu der dem Ventilsitz zugewandten Vorderkante der Strömungsleitwand hin offen sind, so dass sie quasi nach Art von Aussparungen ausgeführt sind, die eine Segmentierung der Strömungsleitwand in ihrer Umfangsrichtung, also rings um die Hauptachse herum zur Folge hat.

Die Wirksamkeit der Strömungsleitwand lässt sich durch Auswahl unterschiedlicher Querschnitte für die Fluiddurchtrittsöffnungen nach Bedarf anpassen. Eine besonders einfache Anpassungsmöglichkeit besteht darin, die in der Achsrichtung der Hauptachse gemessene Höhe der Fluiddurchtrittsöffnungen zu variieren. Als besonders vorteilhaft wird eine Ausführungsform angesehen, bei der sich die Fluiddurchtrittsöffnungen jeweils über die gesamte Höhe der Strömungsleitwand erstrecken.

Weiterhin ist es vorteilhaft, wenn die Fluiddurchtrittsöffnungen, in bezüglich der Hauptachse radialer Richtung betrachtet, eine im Wesentlichen rechteckige Kontur haben.

An ihrer dem Strömungsleitraum zugewandten Innenseite ist die Strömungsleitwand zweckmäßigerweise mit einem abgerundeten Übergangsbereich zur Bodenfläche des Strömungsleitraumes ausgebildet. Dieser abgerundete Übergangsbereich liegt bei segmentierter Strömungsleitwand vorzugsweise auch bezüglich jedes Wandsegmentes vor. Der abgerundete Übergangsbereich begünstigt das Strömungsverhalten und vermeidet unerwünschte Toträume innerhalb des Strömungsleitraumes.

Bevorzugt ist der Strömungsleitwand als ein axial nach vorne hin, also in Richtung zum Ventilsitz, offener Ringraum gestaltet. Dieser Ringraum ist radial innen insbesondere durch ein aus Elastomermaterial bestehendes Dichtelement des Ventilgliedes begrenzt, das die Verschlussfläche definiert. Der Außendurchmesser dieses Dichtelementes ist bevorzugt geringer als der Innendurchmesser der Strömungsleitwand, sodass der radial dazwischenliegende Bereich den ringförmigen Strömungsleitraum bildet.

Als besonders vorteilhaft in Bezug auf das Strömungsverhalten hat es sich erwiesen, wenn das Dichtelement an seiner Stirnseite rings um die Verschlussfläche herum eine sich schräg nach rückwärts erstreckende, konische Randstirnfläche aufweist. Dadurch kann das Dichtelement im Bereich der Verschlussfläche eine größere axiale Dicke als am radialen Randbereich haben. Die axiale Dicke des Dichtelementes am radialen Randbereich entspricht zweckmäßigerweise der axialen Höhe der Strömungsleitwand.

Bevorzugt ist das Ventilglied mehrteilig ausgebildet und verfügt über einen einstückigen Ventilglied-Grundkörper, der die Strömungsleitwand bildet. Als mindestens eine weitere Komponente des Ventilgliedes ist ein bevorzugt scheibenförmiges Dichtelement vorhanden, das an der Vorderseite des Ventilglied-Grundkörpers angebracht ist und das die mit dem Ventilsitz kooperierende Verschlussfläche definiert.

Bei einer besonders vorteilhaften Ausgestaltung des Ventils ist das Ventilglied mit einer axial entgegengesetzt zu der Verschlussfläche orientierten Kompensationsfläche ausgestattet, die eine in dem Ventilgehäuse ausgebildete Kompensationskammer begrenzt, die ständig über mindestens einen Kompensationskanal, der das Ventilglied durchsetzt, mit dem der Verschlussfläche axial vorgelagerten Bereich kommuniziert. Somit herrscht in dem der Verschlussfläche vorgelagerten Bereich und in der Kompensationskammer stets zumindest im Wesentlichen der gleiche Druck, woraus eine Kompensation der auf die Verschlussfläche einwirkenden Druckkraft resultiert. Eine zumindest im Wesentlichen vollständige Druckkompensation ist möglich, wenn in vorteilhafter Weise die Kompensationsfläche des Ventilgliedes zumindest im Wesentlichen und bevorzugt genau gleich groß ist wie die vom Ventilsitz umrahmte Fläche. Die Druckkraftkompensation wirkt sowohl in der Schließstellung als auch in jeder Offenstellung des Ventilgliedes. Folglich kann das Ventilglied mit einer geringen Betätigungskraft zu seiner Hubbewegung angetrieben und in der jeweils eingestellten Schaltstellung festgehalten werden.

Die Erfindung lässt sich prinzipiell bei Ventilen beliebiger Funktionalität realisieren. Besonders vorteilhaft erweist sich die erfindungsgemäße Ausgestaltung in Verbindung mit einem 2/2-Wegeventil. Die Erfindung lässt sich sowohl bei Schaltventilen als auch bei Proportionalventilen verwirklichen.

Damit zum Festhalten der Schließstellung des Ventilgliedes keine externe Energie aufzuwenden ist, ist es vorteilhaft, wenn das Ventilglied durch Federmittel ständig in Richtung seiner Schließstellung vorgespannt ist. Eine Antriebseinrichtung des Ventils hat die Kraft der Federmittel zu überwinden, um das Ventilglied in eine Offenstellung umzuschalten und in der gewünschten Offenstellung festzuhalten. Die erfindungsgemäße Strömungsleitwand hat dabei den Effekt, dass die erforderliche Festhaltekraft auch bei hohen Strömungsgeschwindigkeiten gering und relativ konstant bleibt.

Vorzugsweise ist das Ventil mit einer elektrisch betätigbaren Antriebseinrichtung zur Erzeugung der Hubbewegung des Ventilgliedes ausgestattet. Es handelt sich dabei insbesondere um eine mit einer elektrischen Spuleneinheit ausgestattete Antriebseinrichtung.

Vorzugsweise handelt es sich bei dem Ventil um ein Magnetventil. Insbesondere bei einer Ausgestaltung als Proportionalventil ist es vorteilhaft, wenn die elektrische Antriebseinrichtung eine elektromagnetische Antriebseinrichtung ist, die nach dem elektrodynamischen Wirkprinzip arbeitet, also vergleichbar dem Tauchankerprinzip oder dem Tauchspulenprinzip.

Nachfolgend wird die Erfindung anhand der beiliegenden Zeichnung näher erläutert. In dieser zeigen:
- Figur 1: eine bevorzugte Ausführungsform des erfindungsgemäßen Ventils in einem Längsschnitt und in der Schließstellung des Ventilgliedes,
- Figur 2: den in Figur 1 strichpunktiert umrahmten Bereich II in vergrößerter Darstellung,
- Figur 3: den in Figur 2 strichpunktiert umrahmten Ausschnitt III in vergrößerter Darstellung,
- Figur 4: das Ventil aus Figuren 1 bis 3 in einer Offenstellung des Ventilgliedes,
- Figur 5: den in Figur 4 strichpunktiert umrahmten Bereich V in einer vergrößerten Darstellung,
- Figur 6: den in Figur 5 strichpunktiert umrahmten Bereich VI in einer vergrößerten Darstellung, und

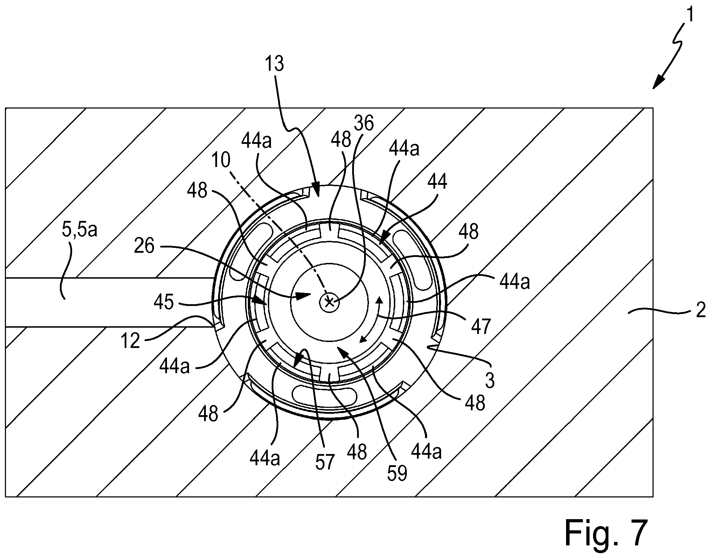

- Figur 7: einen Querschnitt des Ventils gemäß Schnittlinie VII-VII aus Figur 4, wobei das Ventilglied in einer Vorderansicht und mit Blick auf die Verschlussfläche und die Vorderkante der Strömungsleitwand gezeigt ist.

Das in seiner Gesamtheit mit Bezugsziffer 1 bezeichnete Ventil verfügt über ein Ventilgehäuse 2, das bevorzugt mehrteilig ausgebildet ist und das in seinem Innern eine Ventilkammer 3 aufweist.

In die Ventilkammer 3 münden mehrere Ventilkanäle, bei denen es sich exemplarisch um einen ersten Ventilkanal 4 und um einen zweiten Ventilkanal 5 handelt. Jeder Ventilkanal 4, 5 mündet andernends über eine Anschlussöffnung 6 zu einer Außenfläche des Ventilgehäuse 2 aus, sodass die Möglichkeit besteht, jeweils eine weiterführende Fluidleitung anzuschließen.

Von den beiden Ventilkanälen 4, 5 wird der erste Ventilkanal 4 als Einlasskanal 4a und der zweite Ventilkanal 5 als Auslasskanal 5a genutzt. Im Betrieb des Ventils 1 steht der Einlasskanal 4a über die Anschlussöffnung 6 mit einer externen Druckquelle P in Verbindung, die ein unter Druck stehendes Fluid bereitstellt, wobei es sich insbesondere um Druckluft handelt. Der Auslasskanal 5a steht über seine Anschlussöffnung 6 im Betrieb des Ventils 1 mit einem Verbraucher V in Fluidverbindung, bei dem es sich beispielsweise um einen fluidbetätigten Antrieb handelt.

Das Ventil 1 ermöglicht eine Steuerung der Fluidströmung zwischen dem Einlasskanal 4a und dem Auslasskanal 5a. Das Ventil 1 ermöglicht wahlweise ein Absperren der Fluidverbindung zwischen den beiden Ventilkanälen 4, 5 oder eine Freigabe dieser Fluidverbindung, sodass das Druckfluid aus dem Einlasskanal 4a in den Auslasskanal 5a überströmen kann.

Der Einlasskanal 4a mündet mit einer im Folgenden zur besseren Unterscheidung als erste Kanalmündung 7 bezeichneten Kanalmündung in die Ventilkammer 3 ein. Die erste Kanalmündung 7 ist von einem der Ventilkammer 3 zugewandten ringförmigen Ventilsitz 8 umrahmt.

Das Ventil 1 hat eine imaginäre Hauptachse 10. Die erste Kanalmündung 7 und der Ventilsitz 8 sind in der Achsrichtung dieser Hauptachse 10 ausgerichtet, wobei sie insbesondere koaxial dazu angeordnet sind.

Der Auslasskanal 5a mündet abseits der ersten Kanalmündung 7 und dabei insbesondere seitlich in die Ventilkammer 3 ein, wobei seine entsprechende Kanalmündung als zweite Kanalmündung 12 bezeichnet sei. Das Ventil 1 kann ohne weiteres auch mit mehreren in die Ventilkammer 3 einmündenden Auslasskanälen 5a ausgestattet sein. Während die Fluidverbindung zwischen der Ventilkammer 3 und dem Auslasskanal 5a ständig offen ist, ist die Fluidverbindung zwischen dem Einlasskanal 4a und der Ventilkammer 3 mittels eines Ventilgliedes 13 des Ventils 1 steuerbar.

Das Ventilglied 13 hat bevorzugt eine längliche Gestalt und weist exemplarisch eine imaginäre Längsachse 14 auf, die mit der Hauptachse 10 zusammenfällt.

Die Ventilkammer 3 ist beim Ausführungsbeispiel vom axialen Endbereich eine Aufnahmevertiefung 16 gebildet, in die das Ventilglied 13 eingesetzt ist. Das Ventilglied 13 hat eine axiale Vorderseite 15, mit der voraus es in die Ventilkammer 3 hineinragt.

Die Aufnahmevertiefung 16 ist axial innen von einer am Ventilgehäuse 2 ausgebildeten Bodenfläche 16a begrenzt, die gleichzeitig die Bodenfläche der Ventilkammer 3 bildet. Auf der axial entgegengesetzten Außenseite ist die Aufnahmevertiefung 16 durch ein Verschlusselement 11 verschlossen. Das Ventilglied 13 befindet sich axial zwischen der Bodenfläche 16a und dem Verschlusselement 11, wobei es die Ventilkammer 3 an der der Bodenfläche 16a axial gegenüberliegenden Seite begrenzt.

Das Ventilglied 13 weist an seiner axialen Vorderseite 15 eine axial orientierte Stirnfläche auf, die partiell eine der ersten Kanalmündung 7 und dem Ventilsitz 8 zugewandte Verschlussfläche 26 bildet. Auf Veranlassung einer Antriebseinrichtung 27 des Ventils 1, die zweckmäßigerweise von elektrisch betätigbarer Art ist, kann das Ventilglied 13 zu einer linearen Hubbewegung 28 angetrieben werden, die in Achsrichtung der Hauptachse 10 orientiert und in der Zeichnung durch einen Doppelpfeil illustriert ist. Dabei kann das Ventilglied 13 wahlweise in einer nach vorne in Richtung zum Ventilsitz 8 weisenden ersten Bewegungsrichtung oder in einer diesbezüglich entgegengesetzten zweiten Bewegungsrichtung nach rückwärts im Sinne einer Entfernung vom Ventilsitz 8 bewegt werden.

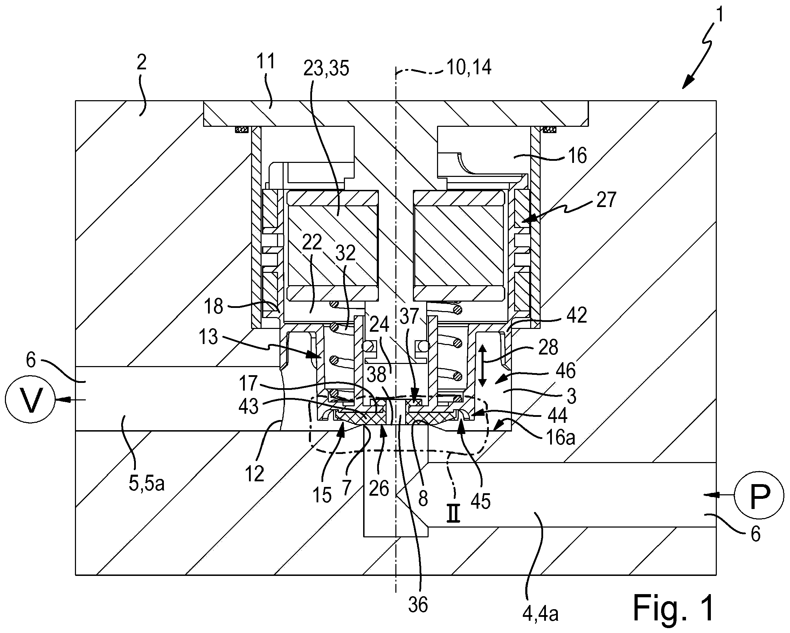

Im Rahmen der Hubbewegung 28 kann das Ventilglied 13 in unterschiedlichen Schaltstellungen positioniert werden. Eine dieser Schaltstellungen ist die aus Figur 1 ersichtliche Schließstellung, in der das Ventilglied 13 mit seiner Verschlussfläche 26 an den Ventilsitz 8 unter Abdichtung anliegt und dabei gleichzeitig die erste Kanalmündung 7 abdeckt. Auf diese Weise ist der Einlasskanal 4a von der Ventilkammer 3 und dem damit ständig verbundenen Auslasskanal 5a abgetrennt.

Vorzugsweise ist das Ventil 1 mit Federmitteln 32 ausgestattet, die das Ventilglied 13 ständig in Richtung der Schließstellung vorspannen. Die Federmittel 32 sind insbesondere so ausgelegt, dass das Ventilglied 13 im deaktivierten Zustand der Antriebseinrichtung 27 in der Schließstellung festgehalten wird, auch wenn in dem Einlasskanal 4a der Systemdruck ansteht. Die Antriebseinrichtung 27 ist daher so auszulegen, dass sie in der Lage ist, die Federkraft der Federmittel 32 zu überwinden, um das Ventilglied 13 in eine Offenstellung zu bewegen.

Bei den Federmitteln 32 handelt es sich insbesondere um mechanische Federmittel 32. Exemplarisch sind sie von einer Druckfeder gebildet, insbesondere von einer Schraubendruckfeder.

Das beispielhafte Ventilglied 13 hat eine topfartige Gestalt mit einer der axialen Vorderseite 15 zugeordneten Bodenwand 17 und einer von der Bodenwand 17 axial nach rückwärts hochragenden Seitenwand 18. Durch die Topfform wird ein von der Ventilkammer 3 abgewandter Ventilglied-Innenraum 22 definiert, in dem zweckmäßigerweise die Federmittel 32 angeordnet sind. Selbige stützen sich axial einerseits an der Bodenwand 17 und andererseits an einem gehäusefesten Abstützmittel 23 ab.

Die Antriebseinrichtung 27 ist bevorzugt von elektrisch betätigbarer Art. Durch Anlegen einer externen Betätigungsspannung kann die Antriebseinrichtung 27 eine Betätigungskraft hervorrufen, die die Hubbewegung 28 und ein angestrebtes Positionieren des Ventilgliedes 13 bewirkt.

Vorzugsweise verfügt die Antriebseinrichtung 27 über eine elektrische Spuleneinrichtung 34, die am Ventilglied 13 angeordnet ist und insbesondere von dessen Seitenwand 18 getragen ist. Diese Spuleneinrichtung 34 kooperiert mit einem bezüglich des Ventilgehäuses 2 ortsfesten Kooperationspartner 35, bei dem es sich vorzugsweise um eine Permanentmagneteinheit handelt, die nach dem elektrodynamischen Wirkprinzip mit der Spuleneinrichtung 34 kooperiert. Beim Ausführungsbeispiel ist dies der Fall. Es ist allerdings auch möglich, den Kooperationspartner 35 als ferromagnetische Einheit zu konzipieren, die nach dem Reluktanzprinzip mit der Spuleneinrichtung 34 zusammenwirkt. Abweichend vom Ausführungsbeispiel kann auch die Spuleneinrichtung 34 am Ventilgehäuse 2 und der Kooperationspartner 35 am Ventilglied 13 angeordnet sein.

Exemplarisch taucht der Kooperationspartner 35 von der Rückseite her in den Ventilglied-Innenraum 22 hinein. Er repräsentiert zweckmäßigerweise auch gleichzeitig die Abstützmittel 23 für die Federmittel 32.

Es versteht sich, dass auch andere Bauformen von Antriebseinrichtungen 27 zur Betätigung des Ventilgliedes 13 vorgesehen sein können.

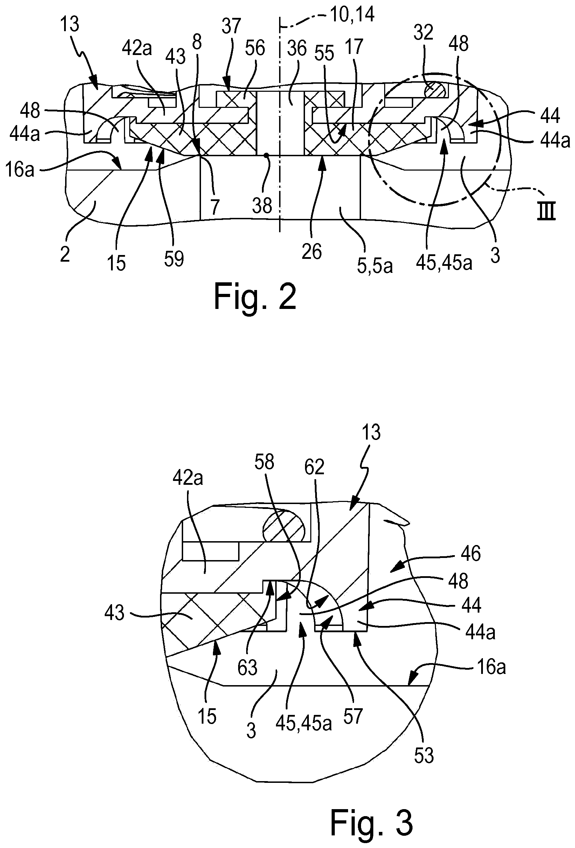

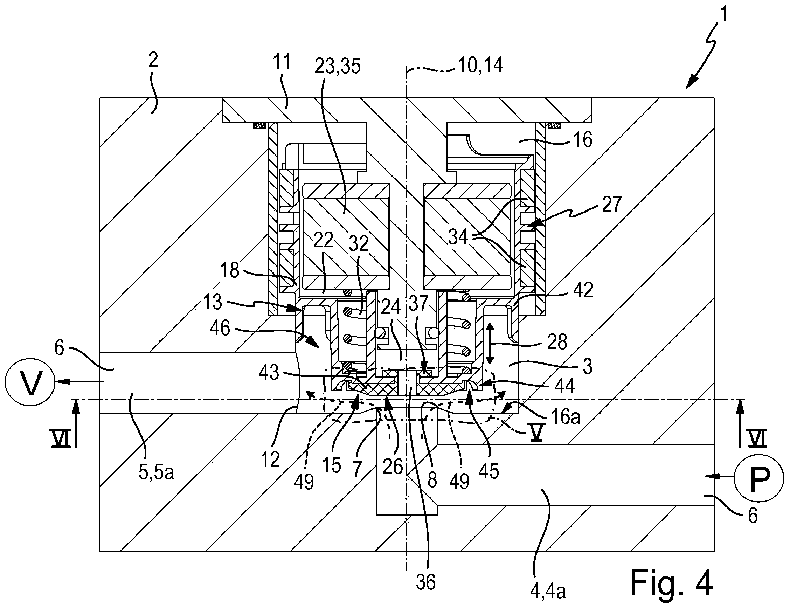

Durch entsprechende Betätigung der Antriebseinrichtung 27 kann das Ventilglied 13 aus der Schließstellung der Figuren 1 bis 3 in mindestens eine Offenstellung bewegt werden, in der es axial von dem Ventilsitz 8 abgehoben und entfernt ist. Die Figuren 4 bis 6 zeigen eine maximale Offenstellung mit maximalem Abstand zwischen der Verschlussfläche 26 und dem Ventilsitz 8. Da das Ventil des Ausführungsbeispiels als Proportionalventil ausgebildet ist, kann das Ventilglied 13 auch noch in anderen Offenstellungen positioniert werden, in denen der Abstand zwischen der Verschlussfläche 26 und dem Ventilsitz 8 kleiner ist als in der maximalen Offenstellung. Vorzugsweise ist das Ventilglied 13 dabei stufenlos positionierbar. Die jeweils eingenommene Offenstellung hängt von der Höhe der an die Antriebseinrichtung 27 angelegten Betätigungsspannung ab.

Das Ventil 1 kann auch als Schaltventil ausgeführt sein, bei dem das Ventilglied 13 außer der Schließstellung nur eine einzige, maximale Offenstellung einnehmen kann.

Der in Achsrichtung der Hauptachse 10 gemessene Abstand zwischen dem Ventilsitz 8 und der Verschlussfläche 26 bestimmt den freien Strömungsquerschnitt, der dem Druckfluid für den Übertritt zwischen dem Einlasskanal 4a und der Ventilkammer 3 zur Verfügung steht. Der freie Strömungsquerschnitt bestimmt die Strömungsrate des überströmenden Druckfluides.

Während das Ventil 1 des Ausführungsbeispiels als ein 2/2-Wegeventil konzipiert ist, ist durchaus auch eine Bauform mit einer anderen Ventilfunktionalität möglich, beispielsweise mit einer 3/2-Ventilfunktion.

Bevorzugt ist das Ventil 1 mit Mitteln ausgestattet, die an dem Ventilglied 13 eine Kompensation des über den Einlasskanal 4a anstehenden Einlassdruckes bewirken, um die Betätigungskräfte für das Umschalten und Festhalten des Ventilgliedes 13 so gering wie möglich zu halten. Zu diesen Kompensationsmitteln gehört eine an dem Ventilglied 13 ausgebildete, axial entgegengesetzt zu der Verschlussfläche 26 orientierte Kompensationsfläche 37, die beim Ausführungsbeispiel an der Rückseite der Bodenwand 17 ausgebildet ist und eine Kompensationskammer 24 begrenzt, die von einem Teilraum des Ventilglied-Innenraumes 22 gebildet ist. Die Kompensationskammer 24 kommuniziert über einen aufgrund seiner Wirkungsweise als Kompensationskanal 36 bezeichneten Fluidkanal mit dem der Verschlussfläche 26 axial vorgelagerten Bereich.

Der Kompensationskanal 36 durchsetzt insbesondere die Bodenwand 17 des Ventilgliedes 13, wobei er rückseitig mit der Kompensationskammer 24 kommuniziert und an seiner Vorderseite über eine Abgriffsöffnung 38 zu der Verschlussfläche 26 ausmündet. Auf diese Weise wird durch den Kompensationskanal 36 der der Verschlussfläche 26 vorgelagerte Fluiddruck abgegriffen und herrscht in gleicher Höhe auch in der Kompensationskammer 24. Folglich sind die Verschlussfläche 26 und die Kompensationsfläche 37 mit dem gleichen Druck beaufschlagt, sodass eine Kompensation der Druckkräfte eintritt. Besonders vorteilhaft ist es dabei, wenn die Kompensationsfläche 37 zumindest im Wesentlichen gleichgroß ist wie die Fläche der ersten Kanalmündung 7.

Bevorzugt ist das Ventilglied 13 mehrteilig ausgebildet, wobei es über einen Ventilglied-Grundkörper 42 verfügt, der an der axialen Vorderseite 15 mit einem aus einem Elastomermaterial bestehenden Dichtelement 43 bestückt ist. Exemplarisch ist die Topfform des Ventilgliedes 13 durch die Form des Ventilglied-Grundkörpers 42 vorgegeben. Die Bodenwand 17 des Ventilgliedes 13 setzt sich aus einem Bodenabschnitt 42a des Ventilglied-Grundkörpers 42 und dem vorne außen an diesen Bodenabschnitt 42a angesetzten Dichtelement 43 zusammen.

Das Dichtelement 43 ist bevorzugt plattenförmig ausgebildet. Beim Ausführungsbeispiel ist es in den Bodenabschnitt 42a eingeknöpft, kann aber zusätzlich oder alternativ beispielsweise auch festgeklebt oder festgeschweißt sein. Jedenfalls ist das elastisch nachgiebige Dichtelement 43 in Achsrichtung der Hauptachse 10 durch den Bodenabschnitt 42a des Ventilglied-Grundkörpers 42 abgestützt.

Die Verschlussfläche 26 ist an dem Dichtelement 43 ausgebildet.

Das Ventilglied 13 weist im Bereich der axialen Vorderseite 15 eine nach vorne, exemplarisch in Richtung zu der Bodenfläche 16a ragende, ringförmige Strömungsleitwand 44 auf. Selbige ist koaxial zu der Hauptachse 10 angeordnet und umrahmt einen nach vorne, in Richtung zu der Bodenfläche 16a, das heißt in Richtung zu dem Ventilsitz 8 hin offene Vertiefung, die als Strömungsleitraum 45 bezeichnet sei. Die Strömungsleitwand 44 trennt den Strömungsleitraum 45 radial von einem das Ventilglied 13 radial außen umschließenden Außenbereich 46 der Ventilkammer 3 ab. Die Strömungsleitwand 44 ist, in Achsrichtung der Hauptachse 10 betrachtet, bevorzugt kreisringförmig gestaltet.

Die Strömungsleitwand 44 hat eine durch einen Doppelpfeil angedeutete Umfangsrichtung 47. Dies ist die Richtung rings um die Hauptachse 10 herum.

Eine Besonderheit der Strömungsleitwand 44 besteht darin, dass sie entlang ihres Umfanges, also in der Umfangsrichtung 47, nicht durchweg geschlossen ist. Vielmehr ist sie an mehreren in der Umfangsrichtung 47 mit Abstand zueinander angeordneten Stellen radial durchbrochen, wobei diese Durchbrechungen als Fluiddurchtrittsöffnungen 48 bezeichnet werden.

Jede Fluiddurchtrittsöffnung 48 erzeugt eine offene radiale Verbindung zwischen dem Strömungsleitraum 45 und dem schon erwähnten Außenbereich 46 der Ventilkammer 3.

Es ist vorteilhaft, wenn die Fluiddurchtrittsöffnungen 48 in der Umfangsrichtung 47 gleichmäßig verteilt sind. Es ist weiterhin vorteilhaft, wenn die Fluiddurchtrittsöffnungen 48 untereinander in der Umfangsrichtung 47 die gleichen Abmessungen haben.

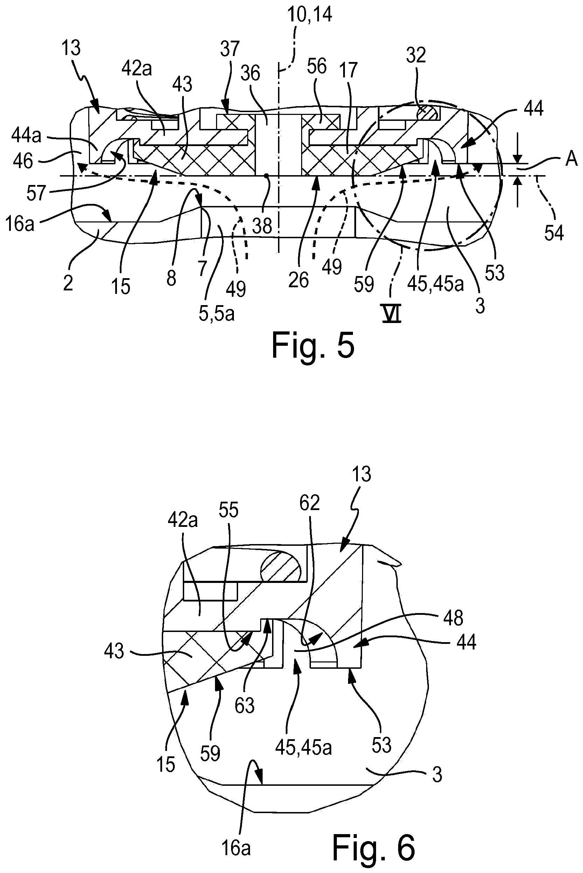

In der Schließstellung des Ventilgliedes 13 sind Strömungsleitwand 44 und Strömungsleitraum 45 unwirksam. Ihre Funktion tritt mit dem Öffnen des Ventilgliedes 13 in Kraft, sobald Druckfluid durch die dann mehr oder weniger weit freigegebene erste Kanalmündung 7 hindurch in die Ventilkammer 3 einströmt, was in Figuren 4 und 5 durch die Strömungspfeile 49 angedeutet ist.

Das Druckfluid wird nach dem Passieren der ersten Kanalmündung 7 durch das mit Abstand vorgelagerte Ventilglied 13 radial umgelenkt, sodass es an der vorderen Stirnseite des Ventilgliedes 13 vorbei nach radial außen in den Außenbereich 46 strömt und von dort in den mindestens einen Auslasskanal 5a übertritt. Allerdings strömt der unmittelbar am Ventilglied 13 vorbeistreichende Strömungsanteil auch in den nach vorne hin offenen Strömungsleitraum 45 ein und erfährt durch die Strömungsleitwand 44 eine Umlenkung, was mit einem gewissen Rückstau einhergeht, der zu einer Verlangsamung der Strömungsgeschwindigkeit führt. Dies gilt allerdings nicht für die Bereiche der Fluiddurchtrittsöffnungen 48, die es dem in den Strömungsstauraum 45 eintretenden Druckfluid ermöglichen, im Wesentlichen ungehindert in den Außenbereich 46 abzuströmen.

Es findet daher an den undurchbrochenen Stellen der Strömungsstauwand 44 eine lokale Erhöhung des statischen Druckes statt, woraus eine Stellkraft resultiert, die das Ventilglied 13 in seiner Öffnungsrichtung beaufschlagt und die größer ist als wenn die Strömungsleitwand 44 und der Strömungsleitraum 45 nicht vorhanden wären. Folglich wird das Ventilglied 13 beim Öffnen und beim Festhalten in der Offenstellung durch Fluidkräfte unterstützt, sodass seitens der Antriebseinrichtung 27 mit geringeren Betriebskräften gearbeitet werden kann und die elektrische Ansteuerung der Antriebseinrichtung 27 insgesamt einfacher ist.

Die Strömungsleitwand 44 endet an der der Bodenfläche 16a zugewandten Stirnseite mit einer Vorderkante 53. Bevorzugt ragt die Strömungsleitwand 44 nur soweit axial nach vorne, dass sie nicht über die Verschlussfläche 26 hinausragt. Anders ausgedrückt erstreckt sich die Strömungsleitwand 44 bevorzugt maximal bis zu einer Bezugsebene 54 nach vorne, die rechtwinklig zu der Hauptachse 10 verläuft und die Verschlussfläche 26 enthält.

Besonders vorteilhaft ist es dabei, wenn die Strömungsleitwand 44 so gestaltet ist, dass ihre Vorderkante 53 bezüglich der Bezugsebene 54 um einen gewissen Abstand A zurückversetzt ist, was auf das Ausführungsbeispiel zutrifft. In der Schließstellung betrachtet, in der die Verschlussfläche 26 am Ventilsitz 8 anliegt, ist die Vorderkante 53 der Strömungsleitwand 44 folglich mit in Achsrichtung der Hauptachse 10 gemessenen Abstand zu dem Ventilsitz 8 angeordnet.

Diese Ausgestaltung der Strömungsleitwand 44 hat den Vorteil, dass sie das radiale Vorbeiströmen des Druckmediums an der axialen Vorderseite 15 des Ventilgliedes 13 nicht behindert, sodass Wirbelbildungen vermieden und ein optimaler Fluiddurchsatz gewährleistet ist.

Die Strömungsleitwand 44 ist bevorzugt ein einstückiger Bestandteil des Ventilglied-Grundkörpers 42. Sie ragt zweckmäßigerweise kragenartig axial von dem Bodenabschnitt 42a des Ventilglied-Grundkörpers 42 weg.

Bevorzugt umrahmt die Strömungsleitwand 44 eine in Richtung zum Ventilsitz 8 hin offene axiale Vertiefung 55 des Ventilglied-Grundkörpers 42, die rückseitig von dem Bodenabschnitt 42a begrenzt ist. In diese axiale Vertiefung 55 ist zweckmäßigerweise das Dichtelement 43 eingesetzt, sodass es an dem Bodenabschnitt 42a anliegt. Beispielsweise ist das Dichtelement 43 dadurch an dem Ventilglied-Grundkörper 42 fixiert, dass es rückseitig einen flanschartigen Haltefortsatz 56 aufweist, mit dem es in eine Durchbrechung des Bodenabschnittes 42a eingeknöpft ist. Zusätzlich oder alternativ kann das Dichtelement 43 an die Außenfläche des Bodenabschnittes 42a auch angeklebt der angeschweißt oder auf andere Weise befestigt sein.

Der Außendurchmesser des Dichtelementes 43 ist bevorzugt kleiner als der Innendurchmesser der ringförmigen Strömungsleitwand 44, sodass radial zwischen der Strömungsleitwand 44 und dem Dichtelement 43 ein zu der Hauptachse 10 konzentrischer Ringraum 45a vorliegt, der den Strömungsleitraum 45 bildet. Radial außen ist der ringförmige Strömungsleitraum 45 von der radialen Innenfläche 57 der Strömungsleitwand 44 begrenzt, radial innen von der radialen Außenumfangsfläche 58 des Dichtelementes 43.

Die Verschlussfläche 26 ist zweckmäßigerweise auf einen zentralen Bereich der nach vorne weisenden vorderen Stirnfläche des Dichtelementes 43 begrenzt. Der Außendurchmesser des Dichtelementes 43 ist insgesamt größer als der Außendurchmesser der Verschlussfläche 26. Insofern ist die Verschlussfläche 26 von einem als Randstirnfläche 59 bezeichneten ringförmigen Flächenabschnitt der vorderen Stirnfläche des Dichtelementes 43 umrahmt, der sich radial nach außen bis zu der radialen Außenumfangsfläche 58 erstreckt.

Von Vorteil ist es, wenn die Randstirnfläche 59 zumindest leicht konisch ist und sich ausgehend vom äußeren Randbereich der Verschlussfläche 26 schräg nach rückwärts, also von der Bodenfläche 16a weg erstreckt. Dies ist exemplarisch einer besonderen Gestaltung des Dichtelementes 43 geschuldet, dessen axiale Dicke im Bereich der Verschlussfläche 46 ein Maximum hat und ausgehend vom äußeren Rand der Verschlussfläche 26 bis hin zu der radialen Außenumfangsfläche 58 des Dichtelementes 43 kontinuierlich abnimmt. Die dadurch bezüglich der Hauptachse 10 schräge Formgebung der Randstirnfläche 59 begünstigt das radiale Abströmen des Druckfluides und sorgt gleichzeitig dafür, dass die dem Ventilglied 13 benachbarte Randzone der Fluidströmung in Richtung zu dem Strömungsleitraum 45 geleitet wird.

Bei einem nicht illustrierten Ausführungsbeispiel ist die Strömungsleitwand 44 an der Vorderkante 53 ununterbrochen und die Fluiddurchtrittsöffnungen 48 sind von ringsum geschlossenen Wanddurchbrechungen der Strömungsleitwand 44 gebildet. Diese Wanddurchbrechungen können beispielsweise schlitzförmig oder bohrungsartig ausgeführt sein.

Als vorteilhaft wird die beim Ausführungsbeispiel realisierte Gestaltung der Fluiddurchtrittsöffnungen 48 angesehen. Hier sind die Fluiddurchtrittsöffnungen 48 als zu der Vorderkante 53 hin offene Wandaussparungen ausgeführt, sodass sie jeweils nur an den beiden in der Umfangsrichtung 47 orientierten Seiten und an der der Vorderkante 53 entgegengesetzten Rückseite begrenzt sind. Daraus resultiert eine segmentierte Wandgestaltung der Strömungsleitwand 44 mit mehreren in der Umfangsrichtung 47 zueinander beabstandeten Wandsegmenten 44a, wobei sich zwischen in der Umfangsrichtung 47 unmittelbar benachbarten Wandsegmenten 44a jeweils eine der Fluiddurchtrittsöffnungen 48 befindet.

Die Wandsegmente 44a sind zweckmäßigerweise jeweils bogenförmig gekrümmt und liegen gemeinsam auf einer zu der Hauptachse 10 konzentrischen Kreislinie.

Exemplarisch erstrecken sich die Fluiddurchtrittsöffnungen 48 jeweils über die gesamte in Achsrichtung der Hauptachse 10 gemessene Höhe der Strömungsleitwand 44. Allerdings kann ihre Höhe auch geringer sein. Es ist ferner vorteilhaft, wenn die Fluiddurchtrittsöffnungen 48 eine im Wesentlichen rechteckige Kontur haben.

Es ist schließlich auch von Vorteil, wenn die Strömungsleitwand 44 radial innen, also im Bereich ihrer radialen Innenfläche 57, mit einem abgerundeten Übergangsbereich 62 in eine Bodenfläche 63 des Strömungsleitraumes 45 übergeht. Die Bodenfläche 63 schließt sich exemplarisch radial außen an das Dichtelement 43 an. Durch die Abrundung definiert die Strömungsleitwand 44 an ihrer radialen Innenseite insgesamt eine im Querschnitt bogenförmig gekrümmte Strömungsleitfläche, die einen optimalen Strömungsverlauf gewährleistet.

## Patentansprüche

1. Ventil zur Steuerung der Strömung eines Fluides, mit einem Ventilgehäuse (2), das eine Ventilkammer (3) definiert, in die mehrere Ventilkanäle (4, 5) einmünden, wobei die Kanalmündung (7) eines ersten Ventilkanals (4) dieser mehreren Ventilkanäle (4, 5) von einem der Ventilkammer (3) zugewandten Ventilsitz (8) umrahmt ist, dem in der Ventilkammer (3) eine Verschlussfläche (26) gegenüberliegt, die an einer axialen Vorderseite (15) eines Ventilgliedes (13) angeordnet ist, das im Rahmen einer in Achsrichtung einer Hauptachse (10) orientierten Hubbewegung (28) zwischen einer mit seiner Verschlussfläche (26) an dem Ventilsitz (8) anliegenden und dadurch den ersten Ventilkanal (4) fluiddicht von der Ventilkammer (3) abtrennenden Schließstellung und mindestens einer von dem Ventilsitz (8) abgehobenen und dadurch eine Fluidverbindung zwischen dem ersten Ventilkanal (4) und der Ventilkammer (3) freigebenden Offenstellung axial bewegbar ist, wobei mindestens ein zweiter Ventilkanal (5) der mehreren Ventilkanäle (4, 5) abseits des Ventilsitzes (8) in ständiger Fluidverbindung mit der Ventilkammer (3) steht und wobei das Ventilglied (13) im Bereich seiner Vorderseite (15) eine nach vorne ragende, zu der Hauptachse (10) koaxiale, ringförmige Strömungsleitwand (44) aufweist, die einen nach vorne hin offenen Strömungsleitraum (45) umrahmt, wobei der erste Ventilkanal (4) ein zur Fluideinspeisung dienender Einlasskanal (4a) und der mindestens eine zweite Ventilkanal (5) ein der Fluidabfuhr dienender Auslasskanal (5a) ist, und wobei die Strömungsleitwand (44) an mehreren entlang ihres Umfanges verteilten Stellen unter Bildung von Fluiddurchtrittsöffnungen (48) radial durchbrochen ist, die jeweils eine offene Verbindung zwischen dem Strömungsleitraum (45) und dem das Ventilglied (13) umschließenden Außenbereich (46) der Ventilkammer (3) herstellen, **dadurch gekennzeichnet, dass** die Strömungsleitwand (44) mit einer axial nach vorne weisenden Vorderkante (53) endet, die bezüglich einer die Verschlussfläche (26) enthaltenden und zu der Hauptachse (10) rechtwinkeligen Bezugsebene (54) axial zurückversetzt ist.

2. Ventil nach Anspruch 1, **dadurch gekennzeichnet, dass** die Strömungsleitwand (44) eine axial nach vorne weisende Vorderkante (53) hat und die Fluiddurchtrittsöffnungen (48) zumindest teilweise zu dieser Vorderkante (53) hin offen sind, derart, dass die Strömungsleitwand (44) im Bereich der Fluiddurchtrittsöffnungen (48) in ihrer Umfangsrichtung (47) segmentiert ist.

3. Ventil nach Anspruch 2, **dadurch gekennzeichnet, dass** sich die Fluiddurchtrittsöffnungen (48) zumindest teilweise jeweils über die gesamte Höhe der Strömungsleitwand (44) erstrecken.

4. Ventil nach einem der Ansprüche 1 bis 3, **dadurch gekennzeichnet, dass** die Fluiddurchtrittsöffnungen (48) eine im Wesentlichen rechteckige Kontur haben.

5. Ventil nach einem der Ansprüche 1 bis 4, **dadurch gekennzeichnet, dass** die Strömungsleitwand (44) radial innen mit einem abgerundeten Übergangsbereich (62) in eine Bodenfläche (63) des Strömungsleitraumes (45) übergeht.

6. Ventil nach einem der Ansprüche 1 bis 5, **dadurch gekennzeichnet, dass** der Strömungsleitraum (45) ein axial nach vorne hin offener Ringraum (45a) ist.

7. Ventil nach Anspruch 6, **dadurch gekennzeichnet, dass** der ringförmige Strömungsleitraum (45) radial innen von einem die Verschlussfläche (26) aufweisenden, insbesondere aus einem Elastomermaterial bestehenden Dichtelement (43) des Ventilgliedes (13) begrenzt ist.

8. Ventil nach Anspruch 7, **dadurch gekennzeichnet, dass** das Dichtelement (43) stirnseitig rings um die Verschlussfläche (26) herum eine sich schräg nach rückwärts erstreckende konische Randstirnfläche (59) aufweist.

9. Ventil nach Anspruch 7 oder 8, **dadurch gekennzeichnet, dass** das Ventilglied (13) über einen einstückigen Ventilglied-Grundkörper (42) verfügt, der die Strömungsleitwand (44) bildet und an dessen axialer Vorderseite das Dichtelement (43) angebracht ist.

10. Ventil nach einem der Ansprüche 1 bis 9, **dadurch gekennzeichnet, dass** das Ventilglied (13) eine axial entgegengesetzt zu der Verschlussfläche (26) orientierte Kompensationsfläche (37) aufweist, die eine in dem Ventilgehäuse (2) ausgebildete Kompensationskammer (24) begrenzt, die ständig über mindestens einen das Ventilglied (13) durchsetzenden und mit mindestens einer Abgriffsöffnung (38) an der Verschlussfläche (26) ausmündenden Kompensationskanal (36) mit dem der Verschlussfläche (26) axial vorgelagerten Bereich kommuniziert, wobei zweckmäßigerweise die Kompensationsfläche (37) gleich groß ist wie die vom Ventilglied (13) abdeckbare Fläche der Kanalmündung (7) des Einlasskanals (4a).

11. Ventil nach einem der Ansprüche 1 bis 10, **dadurch gekennzeichnet, dass** das Ventil (1) als ein 2/2-Wegeventil ausgebildet ist, bei dem es sich insbesondere um ein Proportionalventil handelt.

12. Ventil nach einem der Ansprüche 1 bis 11, **dadurch gekennzeichnet, dass** das Ventilglied (13) durch Federmittel (32) des Ventils (1) ständig in Richtung seiner Schließstellung vorgespannt ist.

13. Ventil nach einem der Ansprüche 1 bis 12, **dadurch gekennzeichnet, dass** es über eine zum Hervorrufen der Hubbewegung (28) des Ventilgliedes (13) dienende, elektrisch betätigbare Antriebseinrichtung (27) verfügt, die zweckmäßigerweise eine elektrische Spuleneinheit aufweist.

## Claims

1. Valve for controlling the flow of a fluid, with a valve casing (2) defining a valve chamber (3) into which lead several valve passages (4, 5), wherein the passage orifice (7) of a first valve passage (4) of these several valve passages (4, 5) is surrounded by a valve seat (8) facing the valve chamber (3) and which, in the valve chamber (3), lies opposite a sealing face (26) which is located on an axial front (15) of a valve member (13) which, in the course of a stroke movement (28) oriented in the axial direction of a main axis (10), is axially movable between a closed position with its sealing face (26) abutting the valve seat (8) and thereby separating the first valve passage (4) from the valve chamber (3) with fluid-tightness, and at least one open position lifted from the valve seat (8) and thereby releasing a fluidic connection between the first valve passage (4) and the valve chamber (3), wherein at least one second valve passage (5) of the several valve passages (4, 5) stands apart from the valve seat (8) in constant fluidic connection with the valve chamber (3), and wherein the valve member (13) has in the area of its front (15) a forwards-extending annular flow guiding wall (44), coaxial to the main axis (10), which surrounds a flow guide chamber (45) which is open towards the front, wherein the first valve passage (4) is an inlet passage (4a) serving for fluid supply and the second valve passage (5), of which there is at least one, is an outlet passage (5a) serving for fluid discharge, and wherein the flow guiding wall (44) is interrupted radially at several points along its periphery to form fluid passage openings (48), each of which creates an open connection between the flow guide chamber (45) and the outer zone (46) of the valve chamber (3) encompassing the valve member (13), **characterised in that** the flow guiding wall (44) ends with an axially forward-facing front edge (53) which is axially recessed relative to a reference plane (54) containing the sealing face (26) and perpendicular to the main axis (10).

2. Valve according to claim 1, **characterised in that** the flow guiding wall (44) has an axially forward-facing front edge (53) and the fluid passage openings (48) are at least partly open towards this front edge (53) in such a way that the flow guiding wall (44) is segmented in its peripheral direction (47) in the area of the fluid passage openings (48).

3. Valve according to claim 2, **characterised in that** the fluid passage openings (48) extend at least partly in each case over the full height of the flow guiding wall (44).

4. Valve according to any of claims 1 to 3, **characterised in that** the fluid passage openings (48) have a substantially rectangular contour.

5. Valve according to any of claims 1 to 4, **characterised in that** the flow guiding wall (44) merges radially inwards with a rounded transition zone (62) into a base area (63) of the flow guide chamber (45).

6. Valve according to any of claims 1 to 5, **characterised in that** the flow guide chamber (45) is an annular space (45a) open axially towards the front.

7. Valve according to claim 6, **characterised in that** the annular flow guide chamber (45) is bounded radially inwards by a seal element (43) of the valve member (13) which has the sealing face (26) and is made in particular of an elastomer material.

8. Valve according to claim 7, **characterised in that** the seal element (43) has at its end face, all round the sealing face (26), a conical boundary end face (59) extending backwards at an angle.

9. Valve according to claim 7 or 8, **characterised in that** the valve member (13) has a single-piece valve member base body (42) which forms the flow guiding wall (44) and to the axial front of which the seal element (43) is attached.

10. Valve according to any of claims 1 to 9, **characterised in that** the valve member (13) has a compensation face (37), oriented axially opposite to the sealing face (26), which bounds a compensation chamber (24) formed in the valve casing (2), which communicates constantly with the area axially in front of the sealing face (26) via at least one compensation passage (36) passing through the valve member (13) and with at least one tap hole (38) opening out at the sealing face (26), wherein expediently the compensation face (37) is the same size as the surface of the passage orifice (7) of the inlet passage (4a) which may be covered by the valve member (13).

11. Valve according to any of claims 1 to 10, **characterised in that** the valve (1) is in the form of a 2/2-way valve, in particular involving a proportional valve.

12. Valve according to any of claims 1 to 11, **characterised in that** the valve member (13) is biased constantly by spring means (32) of the valve (1) in the direction of its closed position.

13. Valve according to any of claims 1 to 12, **characterised in that** it has an electrically actuable drive unit (27) which serves to generate the stroke movement (28) of the valve member (13).

## Revendications

1. Soupape servant à commander l'écoulement d'un fluide, avec un carter de soupape (2), qui définit une chambre de soupape (3), dans laquelle débouchent plusieurs canaux de soupape (4, 5), dans laquelle l'embouchure de canal (7) d'un premier canal de soupape (4) desdits plusieurs canaux de soupape (4, 5) est encadrée par un siège de soupape (8) tourné vers la chambre de soupape (3), auquel siège de soupape une surface de fermeture (26) fait face dans la chambre de soupape (3), laquelle est disposée au niveau d'un côté avant (15) axial d'un organe de soupape (13), qui peut être déplacé de manière axiale, dans le cadre d'un déplacement de levage (28) orienté dans la direction axiale d'un axe principal (10), entre une position fermée reposant par sa surface de fermeture (26) au niveau du siège de soupape (8) et séparant de ce fait le premier canal de soupape (4) de la chambre de soupape (3) de manière étanche aux fluides et au moins une position ouverte relevée du siège de soupape (8) et débloquant de ce fait une communication fluidique entre le premier canal de soupape (4) et la chambre de soupape (3), dans lequel au moins un deuxième canal de soupape (5) des plusieurs canaux de soupape (4, 5) se trouve en permanence en communication fluidique avec la chambre de soupape (3) à l'écart du siège de soupape (8) et dans laquelle l'organe de soupape (13) présente, dans la zone de son côté avant (15), une paroi d'acheminement d'écoulement (44) de forme annulaire dépassant vers l'avant, coaxiale par rapport à l'axe principal (10), laquelle encadre un espace d'acheminement d'écoulement (45) ouvert vers l'avant, dans laquelle le premier canal de soupape (4) est un canal d'entrée (4a) servant à l'alimentation en fluide et l'au moins un deuxième canal de soupape (5) est un canal d'évacuation (5a) servant à l'évacuation de fluide, et dans laquelle la paroi d'acheminement d'écoulement (44) est transpercée de manière radiale au niveau de plusieurs emplacements répartis le long de sa périphérie en formant des ouvertures de passage de fluide (48), qui établissent respectivement une liaison ouverte entre l'espace d'acheminement d'écoulement (45) et la zone extérieure (46), entourant l'organe de soupape (13), de la chambre de soupape (3), **caractérisée en ce que** la paroi d'acheminement d'écoulement (44) se termine avec une arête avant (53) pointant axialement vers l'avant, laquelle est en retrait de manière axiale par rapport à un plan de référence (54) contenant la surface de fermeture (26) et perpendiculaire par rapport à l'axe principal (10).

2. Soupape selon la revendication 1, **caractérisée en ce que** la paroi d'acheminement d'écoulement (44) a une arête avant (53) pointant axialement vers l'avant, et les ouvertures de passage de fluide (48) sont ouvertes au moins en partie vers ladite arête avant (53) de telle manière que la paroi d'acheminement d'écoulement (44) est segmentée dans sa direction périphérique (47) dans la zone des ouvertures de passage de fluide (48).

3. Soupape selon la revendication 2, **caractérisée en ce que** les ouvertures de passage de fluide (48) s'étendent au moins en partie respectivement sur l'ensemble de la hauteur de la paroi d'acheminement d'écoulement (44).

4. Soupape selon l'une quelconque des revendications 1 à 3, **caractérisée en ce que** les ouvertures de passage de fluide (48) ont un contour sensiblement rectangulaire.

5. Soupape selon l'une quelconque des revendications 1 à 4, **caractérisée en ce que** la paroi d'acheminement d'écoulement (44) se confond radialement à l'intérieur avec une zone de transition (62) arrondie dans une surface de fond (63) de l'espace d'acheminement d'écoulement (45).

6. Soupape selon l'une quelconque des revendications 1 à 5, **caractérisée en ce que** l'espace d'acheminement d'écoulement (45) est un espace annulaire (45a) ouvert vers l'avant axialement.

7. Soupape selon la revendication 6, **caractérisée en ce que** l'espace d'acheminement d'écoulement (45) de forme annulaire est délimité radialement à l'intérieur par un élément d'étanchéité (43), présentant la surface de fermeture (26), constitué en particulier d'un matériau élastomère, de l'organe de soupape (13).

8. Soupape selon la revendication 7, **caractérisée en ce que** l'élément d'étanchéité (43) présente, côté frontal tout autour de la surface de fermeture (26), une surface frontale de bord (59) conique s'étendant à l'oblique vers l'arrière.

9. Soupape selon la revendication 7 ou 8, **caractérisée en ce que** l'organe de soupape (13) dispose d'un corps de base d'organe de soupape (42) d'un seul tenant, qui forme la paroi d'acheminement d'écoulement (44) et au niveau du côté avant axial duquel l'élément d'étanchéité (43) est installé.

10. Soupape selon l'une quelconque des revendications 1 à 9, **caractérisée en ce que** l'organe de soupape (13) présente une surface de compensation (37) orientée de manière axiale à l'opposé de la surface de fermeture (26), laquelle délimite une chambre de compensation (24) réalisée dans le carter de soupape (2), laquelle chambre de compensation communique avec la zone montée axialement en amont de la surface de fermeture (26) en permanence par l'intermédiaire d'au moins un canal de compensation (36) traversant l'organe de soupape (13) et débouchant au niveau de la surface de fermeture (26) par au moins une ouverture de préhension (38), dans laquelle de manière opportune la surface de compensation (37) est aussi grande que la surface, pouvant être recouverte par l'organe de soupape (13), de l'embouchure de canal (7) du canal d'entrée (4a).

11. Soupape selon l'une quelconque des revendications 1 à 10, **caractérisée en ce que** la soupape (1) est réalisée sous la forme d'un distributeur à 2/2 voies, qui est une soupape proportionnelle.

12. Soupape selon l'une quelconque des revendications 1 à 11, **caractérisée en ce que** l'organe de soupape (13) est précontraint par des moyens formant ressort (32) de la soupape (1) en permanence en direction de sa position fermée.

13. Soupape selon l'une quelconque des revendications 1 à 12, **caractérisée en ce qu'**elle dispose d'un dispositif d'entraînement (27) pouvant être actionné de manière électrique, servant à provoquer le déplacement de levage (28) de l'organe de soupape (13), lequel dispositif d'entraînement présente de manière opportune une unité à bobines électrique.
